# EUROPEAN PATENT SPECIFICATION

(11) **EP 3 744 692 B1**
(45) Date of publication and mention of the grant of the patent: **05.07.2023**
(21) Application number: 20176257.2
(22) Date of filing: 25.05.2020
(51) Int. Cl.: C02F 1/52, C02F 1/66, C02F 101/20, C02F 101/22, C02F 103/16

(54) **REMOVAL OF HEAVY METALS FROM AQUEOUS SOLUTIONS**
BESEITIGUNG VON SCHWERMETALLEN AUS WÄSSRIGEN LÖSUNGEN
ÉLIMINATION DE MÉTAUX LOURDS DANS DES SOLUTIONS AQUEUSES

(30) Priority: 28.05.2019 EP 19177071
(43) Date of publication of application: 02.12.2020
(73) Proprietor: Grillo-Werke Aktiengesellschaft, 47169 Duisburg (DE)
(72) Inventor: OTT, Timo, 47169 Duisburg (DE)
(74) Representative: dompatent von Kreisler Selting Werner - Partnerschaft von Patent- und Rechtsanwälten mbB

(56) References cited:
- GB-A- 661 946
- SE-C1- 133 866
- US-A- 3 511 599
- US-A- 4 481 090
- US-A- 5 302 290

## Description

The present invention refers to the removal of heavy metals, such as molybdenum and/or tungsten and/or chromium, from aqueous solutions, especially water such as wastewater or aqueous mineral acids, with the help of a lead salt. It further refers to the use of a lead salt, especially lead acetate, for the removal of heavy metals, especially molybdenum, tungsten and/or chromium, from aqueous solutions.

Heavy metals are often present in waste waters of industrial process plants in form of their (oxo)anions. All of them should be removed or the concentration reduced. One of these metals is molybdenum with molybdates being the corresponding oxoanion. Wastewater comprising molybdenum or molybdates occur i.e., where respective steels, such as V4A steel, is in contact with water. Also, corrosion of the steel followed by contact with water leads to water contamination with molybdenum or molybdate.

Heavy metals may occur not only in water but also in other aqueous solutions, such as mineral acids. For example, in the production of mineral acids or by using homogeneous or heterogeneous catalytic reactions (e.g. for oxidation-reactions with molybdenum-catalyst) or in scrubber-systems that are used to wash gases (e.g. exhaust-gases from an industrial oven) molybdenum may occur in sulfuric acid. As a final step, it is advisable for economic reasons to reduce the amount of heavy metals so that the sulfuric acid may be either re-used again or can be disposed of as normal waste in the wastewater.

Statutory limits for heavy metals and thus also for molybdates and molybdenum in wastewater are decreasing in the last years. Thus, the removal thereof has to be improved. Until today, there is no effective method known for a cost-effective removal of heavy metals and especially molybdenum and/or tungsten from water. Surprisingly, it was now found that lead salts, especially lead acetate, lead chloride and lead carbonate is effective in removal of heavy metals from water.

The heavy metals usually are present in form of their (oxo)anions in water or in general aqueous solutions. Thus, if in the following it is mentioned, that a heavy metal is removed, this means that the heavy metal removed is the heavy metal in the form of its oxoanion or any other anion being present in the aqueous solution. For example, molybdenum is usually present as molybdate in water. Removing molybdenum within the meaning of the present invention means removal of molybdenum but also removal of molybdates. The same is of course true for tungsten or any other heavy metal forming an anion in water, said anion forming an only sparingly soluble lead salt.

Thus, in a first embodiment, the problem of the present invention is therefore solved by a method for reducing the concentration of heavy metals in aqueous solutions comprising the following steps:
i) providing an aqueous solution comprising at least one heavy metal, wherein anions of said metal form sparingly soluble lead salts in aqueous solution,
ii) adding at least one water soluble lead salt to the aqueous solution, and
iii) removing the formed precipitate from the aqueous solution. The method according to the invention is further defined in claim 1.

Reducing within the meaning of the present invention means that the concentration is reduced, such that the final concentration of the heavy metal is reduced by at least 50%, preferably by 75%, especially by 80% or by 85%, especially preferred by 90% or 95%. In a preferred embodiment, reducing means the reduction of the heavy metal concentration by 99%, i.e. removal under a threshold of 1 ppm. Preferably, the concentration of the heavy metal is reduced such that the final concentration is in accordance with legal provisions.

Reduction within the meaning of the present invention means preferably a removal of heavy metal such that after the process of the present invention the concentration is so low, that the amount of heavy metal is within the regulatory limits. If the heavy metal is molybdenum, the concentration thereof is preferably 3 mg/l or below, especially 2.5 mg/l or below, preferably 2 mg/l or below. The amount is always calculated with respect to molybdenum or any other heavy metal, even if this is present in the aqueous solution as (oxo)anion.

Aqueous solution within the meaning of the present invention is not limited by the pH value. Thus, it may mean water, especially wastewater from an industrial process. Aqueous solution within the meaning of the present invention are also solutions of acids, such as acetic acid, sulfuric acid, hydrochloric acid, nitric acid or phosphoric acid for example. Preferably the aqueous solution is selected from wastewater and mineral acids, especially preferred from wastewater and sulfuric acid. The sulfuric acid or other mineral acid or acid may be diluted or concentrated, such that the water content is 5 Mol-% or above, preferably 10 Mol-% or above. But also diluted acids with a water content of 50 Mol-% or above can be treated with a method according to the present invention.

Heavy metal within the meaning of the present invention is a metal with a density of 5 g/cm³ or above. The heavy metal is a metal which is present in water in the form of an (oxo)anion, i.e., an oxoanion or any other type of anion. Said anion reacts with the lead and forms an insoluble lead salt. With the method of the present invention it is possible to remove for example molybdenum (present as molybdate in aqueous solution) or tungsten (present as tungstate) in an effective manner. In a preferred embodiment, the heavy metal is selected from molybdenum, tungsten, and/or chromium. Especially preferred, the heavy metal is molybdenum and/or tungsten. In a very preferred embodiment, the heavy metal is molybdenum.

The lead salt can be added as a solid. Especially at low concentrations of the heavy metal, the solubility of the lead salt should be high enough to cause a reaction with the heavy metal. In a preferred embodiment, the lead salt is added as aqueous solution. This helps for a better dosing of the lead salt into the aqueous solution from which the heavy metals shall be removed.

The lead salt should be soluble in water so that a reaction between molybdenum and/or molybdate and lead can take place. Accordingly, the lead salt is preferably selected from lead (II) acetate, lead (IV) acetate, lead subacetate, lead carbonate, lead nitrate, and/or lead chloride, preferably it is lead acetate, especially lead (II) acetate. Different types of lead acetate compounds are known: lead subacetate (Basic lead acetate), Pb₃(OH)₄(CH₃COO)₂, lead (IV) acetate (plumbic acetate, Pb(CH₃COO)₄), lead(II) acetate (lead diacetate, Pb(CH₃COO)₂ and the trihydrate thereof Pb(CH₃COO)₂·3H₂O). These acetates, and especially Pb(CH₃COO)₄, are preferred, as they are cheap and easy in handling.

Preferably, the heavy metal is molybdenum and/or tungsten, especially preferred it is molybdenum. Further preferred, the aqueous solution is wastewater or a mineral acid, especially sulfuric acid. In a preferred embodiment, the lead salt is lead acetate.

Even though it seems contradictory to use a lead salt for the removal of other heavy metals from aqueous solutions, especially from wastewater or acids, it has several advantages compared to other possibilities:
- Ion exchange: ion exchange columns may be used to remove heavy metals from water. Even though effective, this would be extremely expensive due to the costs for purchase and maintenance of the columns.
- Fe-salts: FeCl₃ or FeSO₄ may be used to form a precipitate with other heavy metals, which can be removed from the water. Compared to lead salts, much higher amounts of Fe salts would be necessary. Thus, the costs increase due to the higher weight of formed solid (the precipitate) which has to be removed, moved, stored and disposed. Additionally, higher amounts of Fe-salts are necessary. The amount of Fe salt is about the factor 5 to 60 higher compared to the needed lead salt.
- Organic precipitation agents: precipitation with organic agents is possible but, again, expensive. The waste has to be disposed and the agents themselves are partly expensive, too.

Surprisingly it was therefore found that lead salts, and especially lead acetate, enable a good precipitation of heavy metals, especially molybdenum, tungsten and/or chromium, from aqueous solutions, especially wastewater or acids. The formed precipitate, which is, for example, lead molybdate, lead tungstate or lead chromate respectively, can easily be removed from the water, i.e. by filtration or any other known technique. No specific complicated technical equipment is needed.

Of course, from a first glance there is the disadvantage that lead is added to the aqueous solution. It is of course to be avoided that the lead will be in the aqueous solution after the treatment. Therefore, the aqueous solution to be cleaned comprises additionally sulphate ions. Lead is added over-stochiometric compared to the amount of heavy metals in the aqueous solution. This enables a better removal of heavy metals. At the same time, excess of lead reacts with the sulphate and precipitates as lead sulphate. Thus, no lead remains in the water. The reaction of lead with the sulphate does not negatively influence the reaction of lead with the heavy metals. The sulphate in the aqueous solution may be present originally, i.e., as additional impurity. If this is not the case, low concentrations of a non-toxic, non-harmful sulphate, such as sodium sulphate, ammonium sulphate, or sulfuric acid can be added. Alternatively, also carbonate may be added to remove excess of lead. Here, the pH value has to be adjusted, as lead carbonate is also not soluble in water in basic environment. Suitable carbonates are for example sodium carbonate or ammonium carbonate.

The success of the reduction of the heavy metal from the aqueous solution is dependant on the pH value. The pH value of the aqueous solution may range between 0 and 14, as any water, wastewater or acid may be used. Usually, the pH value of acids, especially mineral acids, is in the range of from 0 to 6. Also, the pH value of industrial waste waters is often in this range.

It was now surprisingly found that the amount of reduction of the heavy metal concentration can be increased if the pH value of the aqueous solution to be treated is in a range from 6.0 to 12. Thus, the pH of the aqueous can be adjusted. This may be performed prior or after the addition of the lead salt. It may also be adjusted prior and after the addition of the lead salt.

Adjustment of the pH value may be performed in cases where the final concentration of heavy metals in the aqueous solution has to be as low as possible. Here, the pH should be adjusted to a range from 6.0 to 12. Especially, the pH value is in a range from 6.5 to 10, preferably from 7.0 to 9. This enables a good precipitation of the formed lead-molybdenum-precipitate.

Of course, neutralization of an aqueous solution means that additional costs occur for the neutralization agent. Additionally, the neutralization has to be performed in such a way, that the resulting exothermic reaction does not re-suit in any harmful conditions for people working around. As a reduction of heavy metals also takes place at pH values from 0 to 7.0 or from 0 to 6.0, it is to be decided from case to case whether and how the pH of the aqueous solution is to be adjusted.

If the aqueous solution is wastewater, the pH adjustment is usually advantageous as the final concentration of heavy metals has to be as low as possible. On the other hand, if the aqueous solution is an acid, especially sulfuric acid, neutralization is usually not necessary but addition of the lead salt at low pH is sufficient to reduce the concentration of heavy metals such that the acid can be either re-used or treated as normal waste.

Where an adjustment of the pH value is performed. the final pH value is preferably in the neutral or basic range. The pH value of the aqueous solution, especially water is therefore preferably adjusted to a range from 6.0 to 12. Especially, the pH value is in a range from 6.5 to 10, preferably from 7.0 to 9. This enables a good precipitation of the formed lead-molybdenum-precipitate. The pH may be adjusted prior or after the addition of the lead salt or both of it. If it is adjusted prior to the addition of the lead salt, it is not necessary to adjust it directly to the range of from 6 to 12, as the addition of the lead salt may also result in a rising of the pH value. Thus, if the pH value is adjusted prior to the addition of the salt, it is preferably adjusted to a range from 0 to 9, preferably from 3 to 8.5 and especially preferred from 4 to 8 or from 5 to 7.5 or from 5.5 to 7.

A method for removing heavy metals from aqueous solutions which is outside of the scope of the present invention comprises the following steps:
i) providing an aqueous solution comprising at least one heavy metal, wherein anions of said metal form sparingly soluble lead salts in aqueous solution, and
   adjusting the pH value of the water from 0 to 9,
ii) adding a water-soluble lead salt to the aqueous solution,
iii) removing the formed precipitate from the aqueous solution,
wherein the aqueous solution is wastewater or an acid, preferably wastewater, especially industrial wastewater.

Another method for removing heavy metals from aqueous solution which is outside of the scope of the present invention comprises the following steps:
i) providing an aqueous solution comprising at least one heavy metal, wherein anions of said metal form sparingly soluble lead salts in aqueous solution, and adjusting the pH value of the aqueous solutionfrom 0 to 9,
ii) adding a water-soluble lead salt to the aqueous solution, and adjusting the pH value of the water to be in a range from 7.0 to 12,
iii) removing the formed precipitate from the aqueous solution,
wherein the aqueous solution is wastewater or an acid, preferably wastewater, especially industrial wastewater.

Yet another method for removing heavy metals from an aqueous solution which is outside of the scope of the present invention comprises the following steps:
i) providing an aqueous solution comprising at least one heavy metal, wherein anions of said metal form sparingly soluble lead salts in aqueous solution,
ii) adding a water-soluble lead salt to the aqueous solution, and adjusting the pH value of the aqueous solution to be in a range from 7.0 to 12,
iii) removing the formed precipitate from the aqueous solution, wherein the aqueous solution is wastewater or an acid, preferably wastewater, especially industrial wastewater.

In a preferred embodiment, the method for removing heavy metals from an aqueous solution according to the invention is defined as in claim 1 and further comprises in step i) adjusting the pH value of the aqueous solution from 0 to 9, wherein the aqueous solution is wastewater or an acid, preferably wastewater, especially industrial wastewater.

In another especially preferred embodiment, the method for removing heavy metals from an aqueous solution is defined as in claim 1 and further comprises in step i) adjusting the pH value of the aqueous solution from 0 to 9, and in step ii) adding a water-soluble lead salt to the aqueous solution, and adjusting the pH value of the aqueous solution to be in a range from 7.0 to 12, wherein the aqueous solution is wastewater or an acid, preferably wastewater, especially industrial wastewater.

Yet, a further preferred embodiment is a method for removing heavy metals from an aqueous solution, the method being defined as in claim 1 and further comprising in step ii) adding a water-soluble lead salt to the aqueous solution, and adjusting the pH value of the aqueous solution to be in a range from 7.0 to 12, wherein the aqueous solution is wastewater or an acid, preferably wastewater, especially industrial wastewater.

In all of the above embodiments, the at least one heavy metal is preferably selected from molybdenum, tungsten and/or chromium, especially from molybdenum and/or tungsten, especially preferred it is molybdenum. The lead salt is preferably added in an aqueous solution. The concentration of which is depending on the amount of heavy metal present in the water.

To adjust the pH to the respective values, a mild basic adjuvant, such as Ca(OH)₂, or a solution of NaOH may be used. Suitable compounds are known for the skilled person. After addition of the lead salt, the pH value may be too high. It can be reduced with any acid, for example H₂SO₄. Adjustment of pH may also influence the temperature of the water. This does not influence the removal of molybdate and/or molybdenum.

To enable a good precipitation, it is advantageous to distribute the lead salt within the water as homogenous as possible. Therefore, in a preferred embodiment, the addition of the lead salt to the water is performed under mixing. Any mixing device, such as a static mixer, a paddle mixer, or any other suitable mixer may be used.

Without being bound by theory, it is assumed that after addition of the lead salt, the lead sulphate, which is formed in the aqueous solution comprising sulphate ions, is in chemical equilibrium with its surrounding. Thus, there is the possibility, that lead ions and sulphate ions react with other heavy metals and ions in the aqueous solution. The addition of lead sulphate is not advantageous, as aged lead sulphate seems to be no more in a chemical equilibrium with the aqueous solution.

The method of the present invention can be performed continuously or discontinuously, i.e., in a batch process. If the method is performed continuously, the aqueous solution is provided continuously in a pipe. The lead salt is added into said pipe and mixing may be performed by a static mixer, or by using a continuous stirred-tank reactor. A filter would be necessary in a specific section of the pipes, to remove the precipitate. Alternatively, the aqueous solution may be provided in batches. In a respective batch-reactor the addition of the lead salt takes place. After precipitation, the liquid can be removed from the batch reactor and the remaining precipitate may be disposed.

In another embodiment, the present invention refers to the use, as defined in claim 13, of a lead salt for the removal of one or more heavy metals, especially molybdenum, tungsten and/or chromium, from aqueous solutions, especially wastewater or acids. The lead salt is preferably selected from lead (II) acetate, lead (IV) acetate, lead subacetate, lead carbonate, lead nitrate, and/or lead chloride, preferably it is lead (II) acetate. The respective salts are further defined in connection with the method according to the present invention. These definitions are of course also applicable for the respective use of the salts.

In the following examples, the present invention is disclosed in more detail, without meaning to limit the scope of it.

### Examples:

In all examples, the amount of Mo was determined with ICP-OES. The amount of sulphate ions was also determined. Ion chromatography was used to do so.

### Reference Example 1:

500 ml of wastewater are provided in a beaker. The concentration of Mo was determined to be 20.7 mg/l. The water also contained sulphate ions in a concentration of 30500 ppm. The pH value was 0.58. It was adjusted to 4 with a 10% solution of Ca(OH)₂. The temperature was rising from 20 °C to 26 °C. 5g FeCl₃ × 6 H₂O were added as 40% solution (5g FeCl₃ × 6 H₂O + 7.5g H₂O) with a dropping funnel. The solution turned cloudy orange with some white precipitates in it. When adding the Fe salt, the temperature of the wastewater remained constant, the pH was dropping. After stirring for 55 min, the pH was again adjusted to 4 with a 10% solution of Ca(OH)₂. The temperature was rising to 23 °C. After stirring for further 30 minutes, the pH was adjusted to 8.5 with Ca(OH)₂.

The formed precipitate is separated from the solution in a centrifuge. The amount of Mo in the water was 3.0 mg/l after the centrifugation.

### Example 2:

500 ml waste water with a concentration of Mo of 20.7 mg/ml (T: 17.5 °C, pH 0.69) was provided and the pH was adjusted to 8.5 with Ca(OH)₂. The water also contained sulphate ions in a concentration of 30500 ppm. After stirring for 30 min, 1g Pb(CH₃COO)₂×3H₂O (solution in 5 ml H₂O) was added dropwise with a pipette. The pH was again adjusted to 8.5. After stirring for 30 min, the solution was filtrated. The cleaned water comprised Mo in a concentration of 0.27 mg/l.

### Examples 3 to 5:

0.9 I wastewater (c(Mo): 20.7 mg/ml, pH 0.72) were provided. The water also contained sulphate ions in a concentration of 30500 ppm The pH was adjusted to 8.5 with Ca(OH)₂.

3 portions, each comprising 300 ml water, were formed. Lead acetate was added in different amounts. After stirring and filtration as described in example 2, the amount of Mo in the water was determined:

| Example | Amount of Pb(CH₃)COO) x 3 H₂O [mg/l waste water] | Mo [mg/l] |
|---|---|---|
| 3 | 312.3 | 0.64 |
| 4 | 1185.5 | 0.87 |
| 5 | 511 | 0.27 |

### Example 6:

Further Reference Examples with FeCl₃ × 6 HzO, Fe(II)SO₄×7 H₂O) and Examples according to the invention with Pb(IV)acetate were performed. The amount of salt needed for the wastewater, assuming an amount of wastewater of 8 m³/h were calculated. Values of the amount of Mo prior and after treatment were measured. Besides Mo, the water also contained sulphate ions in a concentration of 30500 ppm. The results are shown in the following table:

| Active ingredient | Needed ingredient for an amount of wastewater of 8m³/h | Initial Mo content [mg/l] | Mo content after treatment [mg/l] |
|---|---|---|---|
| FeCl₃ x 6 H₂O | 10 g/l | 20.7 | 2.65 |
| | 80 kg/h | | |
| | 640 t/a | | |
| Fe(II)SO₄ x 7 H₂O | 13.3 g/l | 20.7 | 3.03 |
| | 82.4 kg/h | | |
| | 660 t/a | | |
| Pb(CH₃COO)₂ x 3 H₂O | 0.17 g/l | 20.7 | 1.79 |
| | 1.36 kg/h | | |
| | 10.9 t/a | | |

The results show that lead salts are much more effective in removal of Mo from water compared with Fe salts. The amount of ingredient is much less and the method is more effective.

### Reference Examples 7 and 8:

In both examples, the wastewater contained Mo in an amount of 20.7 mg/l and sulphate ions in an amount of 30500 ppm.

7) A column was filled with an anion exchanger based on Cl⁻. It was packed with sand above and below the exchanger. Water was used as solvent.

Wastewater (150 ml) was allowed to pass the column. The concentration of Mo after the column in the water was 5.84 mg/l.

8) The same experiment was performed but with an adjustment of the pH value of the wastewater prior to the addition thereof to the column. The concentration of Mo in the wastewater after the column was 0.79 mg/l.

### Reference Examples 9 and 10:

In both examples, the wastewater contained Mo in an amount of 20.7 mg/l and sulphate ions in an amount of 30500 ppm.

9) A mixed bed ion exchanger based on H⁺ and OH⁻ was used to clean wastewater. The cleaning was performed as described in Reference Example 7.

The concentration of Mo after the cleaning was 0.58 mg/l.

10) A mixed bed ion exchanger was used. The cleaning was performed as described in Reference Example 8. The concentration of Mo after the cleaning was 1.15 mg/l.

### Reference Examples 11 and 12:

In both examples, the wastewater contained sulphate ions in an amount of 30500 ppm.

11) Activated carbon was used as ingredient to clean wastewater. Wastewater with a Mo content of 20.7 mg/l was used (150 ml). 1 g of activated carbon was added. After filtration the amount of Mo was determined to be 11.5 mg/l.

12) Activated carbon was again used as in Reference Example 11, but the pH of the water was adjusted to 8.5. Wastewater with a Mo content of 54.4 mg/l was used (150 ml). After filtration the amount of Mo was determined to be 43.0 mg/l.

### Example 13:

300 ml wastewater with a Mo concentration of 51.4 mg/l, sulphate content of 30500 ppm, and a pH value of 0.48 was used. The pH was adjusted with Ca(OH)₂ to 8.5. 168.43 mg/l lead (II) acetate (trihydrate) was used as solution and added to the wastewater. The pH was again adjusted with H₂SO₄. After stirring for 30 minutes, the water was filtrated. The concentration of Mo after filtration was 1.79 mg/l.

## Claims

1. Method for removing heavy metals from an aqueous solution comprising the following steps:
i) providing an aqueous solution comprising at least one heavy metal as well as sulphate ions, wherein said metal is present in the aqueous solution in the form of an oxoanion or any other anion, wherein said anions of said metal form insoluble lead salts in aqueous solution,
ii) adding at least one water soluble lead salt to the water, wherein the lead reacts with the heavy metal so as to form a precipitate, wherein the amount of lead is over-stoichiometric to the amount of heavy metals in the aqueous solution, wherein excess of lead reacts with the sulphate and precipitates as lead sulphate, and
iii) removing the formed precipitate from the water, so that no lead remains in the water.

2. Method according to claim 1, wherein the lead salt is selected from lead (II) acetate, lead (IV) acetate, lead subacetate, lead carbonate, lead nitrate, and/or lead chloride, preferably it is lead (II)acetate, lead chloride and/or lead carbonate.

3. Method according to claim 1 or 2, wherein the aqueous solution is water or an acid, preferably wastewater or a mineral acid, especially industrial wastewater or sulfuric acid.

4. Method according to any of claims 1 to 3, wherein the sulphate ions are present in the water initially or subsequently added during step i) to provide the aqueous solution comprising at least one heavy metal as well as sulphate ions.

5. Method according to any of claims 1 to 4, wherein the heavy metal is selected from molybdenum, tungsten and/or chromium, especially from molybdenum and/or tungsten, preferably it is molybdenum.

6. Method according to any of claims 1 to 5, further comprising the step of adjusting the pH value of the water between steps i) and ii) and/or after step ii).

7. Method according to claim 6, wherein the pH is adjusted to be in a range from 6.0 to 12 if it is adjusted after the addition of the lead salt.

8. Method according to claim 6, wherein the pH is adjusted to be in a range from 0 to 9 if it is adjusted prior to the addition of the lead salt.

9. Method according to any of claims 1 to 8, wherein the amount of lead salt added to the aqueous solution is stochiometric or over-stochiometric compared to the amount of molybdenum and molybdate in the water.

10. Method according to any of claims 1 to 9, wherein the removing of the precipitate is performed with a filter.

11. Method according to any of claims 1 to 10, wherein the addition in step ii) is performed under mixing.

12. Method according to any of claims 1 to 11, wherein the aqueous solution is provided continuously or discontinuously.

13. Use of a lead salt to remove heavy metals, especially molybdenum, tungsten and/or chromium, from aqueous solutions comprising sulphate ions, wherein said metals are present in the aqueous solution in the form of oxoanions or any other anions, wherein said anions of said metal form insoluble lead salts in aqueous solution so that the lead reacts with the heavy metal so as to form a precipitate, wherein the amount of lead is over-stoichiometric to the amount of heavy metals in the aqueous solution, wherein excess of lead reacts with the sulphate and precipitates as lead sulphate, and wherein the formed precipitate is removed from the water, so that no lead remains in the water.

14. Use according to claim 13, wherein the lead salt is selected from lead (II) acetate, lead (IV) acetate, lead subacetate, lead carbonate, lead nitrate, lead chloride, lead chromate, preferably it is lead (IV) acetate.

15. Use according to claim 13 or 14, wherein the aqueous solution is selected from wastewater, especially industrial wastewater, or an acid, especially a mineral acid, preferably sulfuric acid.

## Patentansprüche

1. Verfahren zum Entfernen von Schwermetallen aus einer wässrigen Lösung, umfassend die folgenden Schritte:
i) Bereitstellen einer wässrigen Lösung, die wenigstens ein Schwermetall sowie Sulfationen umfasst, wobei das Metall in der wässrigen Lösung in Form eines Oxoanions oder irgendeines anderen Anions vorhanden ist, wobei die Anionen des Metalls in wässriger Lösung unlösliche Bleisalze bilden,
ii) Hinzufügen wenigstens eines wasserlöslichen Bleisalzes zu dem Wasser, wobei das Blei mit dem Schwermetall unter Bildung eines Niederschlags reagiert, wobei die Menge des Bleis einen stöchiometrischen Überschuss gegenüber der Menge der Schwermetalle in der wässrigen Lösung bildet, wobei das überschüssige Blei mit dem Sulfat reagiert und als Bleisulfat ausfällt, und
iii) Entfernen des gebildeten Niederschlags aus dem Wasser, so dass kein Blei in dem Wasser verbleibt.

2. Verfahren gemäß Anspruch 1, wobei das Bleisalz aus Blei(II)acetat, Blei(IV)acetat, Bleisubacetat, Bleicarbonat, Bleinitrat und/oder Bleichlorid ausgewählt ist, wobei es sich vorzugsweise um Blei(II)acetat, Bleichlorid und/oder Bleicarbonat handelt.

3. Verfahren gemäß Anspruch 1 oder 2, wobei es sich bei der wässrigen Lösung um Wasser oder eine Säure handelt, vorzugsweise Abwasser oder eine Mineralsäure, insbesondere Industrieabwasser oder Schwefelsäure.

4. Verfahren gemäß einem der Ansprüche 1 bis 3, wobei die Sulfationen am Anfang in dem Wasser vorhanden sind oder anschließend während Schritt i) hinzugefügt werden, was die wässrige Lösung ergibt, die wenigstens ein Schwermetall sowie Sulfationen umfasst.

5. Verfahren gemäß einem der Ansprüche 1 bis 4, wobei das Schwermetall aus Molybdän, Wolfram und/oder Chrom, insbesondere aus Molybdän und/oder Wolfram, ausgewählt ist, wobei es sich vorzugsweise um Molybdän handelt.

6. Verfahren gemäß einem der Ansprüche 1 bis 5, weiterhin umfassend den Schritt des Einstellens des pH-Werts des Wassers zwischen den Schritten i) und ii) und/oder nach Schritt ii).

7. Verfahren gemäß Anspruch 6, wobei der pH-Wert auf einen Bereich von 6,0 bis 12 eingestellt wird, wenn er nach der Zugabe des Bleisalzes eingestellt wird.

8. Verfahren gemäß Anspruch 6, wobei der pH-Wert auf einen Bereich von 0 bis 9 eingestellt wird, wenn er vor der Zugabe des Bleisalzes eingestellt wird.

9. Verfahren gemäß einem der Ansprüche 1 bis 8, wobei die Menge des Bleisalzes, die zu der wässrigen Lösung gegeben wird, im Vergleich zu der Menge von Molybdän und Molybdat im Wasser stöchiometrisch oder überstöchiometrisch ist.

10. Verfahren gemäß einem der Ansprüche 1 bis 9, wobei das Entfernen des Niederschlags mit einem Filter erfolgt.

11. Verfahren gemäß einem der Ansprüche 1 bis 10, wobei die Zugabe in Schritt ii) unter Mischen erfolgt.

12. Verfahren gemäß einem der Ansprüche 1 bis 11, wobei die wässrige Lösung kontinuierlich oder diskontinuierlich bereitgestellt wird.

13. Verwendung eines Bleisalzes zum Entfernen von Schwermetallen, insbesondere Molybdän, Wolfram und/oder Chrom, aus wässrigen Lösungen, die Sulfationen umfassen, wobei die Metalle in der wässrigen Lösung in Form von Oxoanionen oder irgendwelchen anderen Anionen vorhanden sind, wobei die Anionen des Metalls in wässriger Lösung unlösliche Bleisalze bilden, so dass das Blei mit dem Schwermetall unter Bildung eines Niederschlags reagiert, wobei die Menge des Bleis einen stöchiometrischen Überschuss gegenüber der Menge der Schwermetalle in der wässrigen Lösung bildet, wobei das überschüssige Blei mit dem Sulfat reagiert und als Bleisulfat ausfällt, und wobei der entstandene Niederschlag aus dem Wasser entfernt wird, so dass kein Blei in dem Wasser verbleibt.

14. Verwendung gemäß Anspruch 13, wobei das Bleisalz aus Blei(II)acetat, Blei(IV)acetat, Bleisubacetat, Bleicarbonat, Bleinitrat, Bleichlorid und Bleichromat ausgewählt ist, wobei es sich vorzugsweise um Blei(IV)acetat handelt.

15. Verwendung gemäß Anspruch 13 oder 14, wobei die wässrige Lösung aus Abwasser, insbesondere Industrieabwasser, oder einer Säure, insbesondere einer Mineralsäure, vorzugsweise Schwefelsäure, ausgewählt ist.

## Revendications

1. Procédé pour éliminer des métaux lourds d'une solution aqueuse, comprenant les étapes suivantes consistant à :
i) procurer une solution aqueuse comprenant au moins un métal lourd et des ions de sulfate, dans lequel ledit métal est présent dans la solution aqueuse sous forme d'un oxoanion ou tout autre anion, dans lequel lesdits anions dudit métal forment des sels de plomb insolubles dans une solution aqueuse,
ii) ajouter au moins un sel de plomb soluble dans l'eau à l'eau, dans lequel le plomb réagit avec le métal lourd pour former un précipité, dans lequel la quantité de plomb est sur-stoechiométrique par rapport à la quantité de métaux lourds dans la solution aqueuse, dans lequel l'excès de plomb réagit avec le sulfate et est précipité sous forme de sulfate de plomb, et
iii) éliminer le précipité formé de l'eau, de manière qu'aucun plomb reste dans l'eau.

2. Procédé selon la revendication 1, dans lequel ledit sel de plomb est choisi parmi l'acétate de plomb(II), l'acétate de plomb(IV), le su acétate de plomb, le carbonate de plomb, le nitrate de plomb, et/ou le chlorure de plomb, de préférence l'acétate de plomb(II), le chlorure de plomb, et/ou le carbonate de plomb.

3. Procédé selon la revendication 1 ou 2, dans lequel ladite solution aqueuse est de l'eau ou un acide, de préférence de l'eau usée ou un acide minéral, notamment un effluent industriel ou l'acide sulfurique.

4. Procédé selon l'une quelconque des revendications 1 à 3, dans lequel les ions sulfate sont présents dans l'eau dès le début, ou sont ajoutés ensuite pendant l'étape i) pour procurer la solution aqueuse comprenant au moins un métal lourd et des ions de sulfate.

5. Procédé selon l'une quelconque des revendications 1 à 4, dans lequel ledit métal lourd est choisi parmi molybdène, tungstène et/ou chrome, notamment parmi molybdène et/ou tungstène, de préférence molybdène.

6. Procédé selon l'une quelconque des revendications 1 à 5, comprenant en outre l'étape consistant à ajuster la valeur pH de l'eau entre les étapes i) et ii) et/ou après l'étape ii).

7. Procédé selon la revendication 6, dans lequel le pH est ajusté dans une plage de 6,0 à 12, quand il est ajusté après l'ajout du sel de plomb.

8. Procédé selon la revendication 6, dans lequel le pH est ajusté dans une plage de 0 à 9, quand il est ajusté avant l'ajout du sel de plomb.

9. Procédé selon l'une quelconque des revendications 1 à 8, dans lequel la quantité de sel de plomb ajoutée à la solution aqueuse est stoechiométrique ou sur-stoechiométrique par rapport à la quantité de molybdène et molybdate dans l'eau.

10. Procédé selon l'une quelconque des revendications 1 à 9, dans lequel l'élimination du précipité est effectuée avec un filtre.

11. Procédé selon l'une quelconque des revendications 1 à 10, dans lequel l'ajout dans l'étape ii) est effectué en mélangeant.

12. Procédé selon l'une quelconque des revendications 1 à 11, dans lequel la solution aqueuse est procuré en continu ou de manière discontinue.

13. Utilisation d'un sel de plomb pour éliminer des métaux lourds, notamment molybdène, tungstène et/ou chrome, de solutions aqueuses comprenant des ions de sulfate, dans lequel lesdits métaux sont présents dans la solution aqueuse sous forme d'oxoanions ou de tout autre anions, dans lequel lesdits anions dudit métal forment des sels de plomb insolubles dans une solution aqueuse, de manière que le plomb réagisse avec le métal lourd pour former un précipité, dans lequel la quantité de plomb est sur-stoechiométrique par rapport à la quantité de métaux lourds dans la solution aqueuse, dans lequel l'excès de plomb réagit avec le sulfate et est précipité sous forme de sulfate de plomb, et dans lequel le précipité formé est éliminé de l'eau, de manière qu'aucun plomb reste dans l'eau.

14. Utilisation selon la revendication 13, dans laquelle ledit sel de plomb est choisi parmi l'acétate de plomb(II), l'acétate de plomb(IV), le subacétate de plomb, le carbonate de plomb, le nitrate de plomb, le chlorure de plomb, le chromate de plomb, de préférence l'acétate de plomb(IV).

15. Utilisation selon la revendication 13 ou 14, dans laquelle ladite solution aqueuse est choisie parmi de l'eau usée, notamment un effluent industriel, ou un acide, notamment un acide minéral, de préférence l'acide sulfurique.
